# EUROPÄISCHE PATENTSCHRIFT

(11) **EP 0 441 224 B1**
(45) Veröffentlichungstag und Bekanntmachung des Hinweises auf die Patenterteilung: **19.01.1994**
(21) Anmeldenummer: 91101116.1
(22) Anmeldetag: 29.01.1991
(51) Int. Cl.: F16B 39/30

(54) **Selbsthemmendes Gewinde**
Selfblocking thread
Taraudage auto-blocant

(30) Priorität: 09.02.1990 DE 4003892
(43) Veröffentlichungstag der Anmeldung: 14.08.1991
(73) Patentinhaber: Härle, Anton, Prof. Dr., D-48161 Münster (DE)
(72) Erfinder: Härle, Anton, Prof. Dr., D-48161 Münster (DE)
(74) Vertreter: Habbel, Hans-Georg, Dipl.-Ing.

(56) Entgegenhaltungen:
- DE-C- 616 084
- DE-C- 3 219 264
- FR-A- 2 408 061
- GB-A- 2 131 905
- US-A- 2 787 796
- US-A- 4 870 957

## Beschreibung

Die Erfindung bezieht sich auf Elemente mit selbsthemmendem Gewinde zur Verschraubung gemäß dem Oberbegriff des Hauptanspruches.

Aus der gattungsbildenden US-PS 45 86 861 ist ein selbsthemmendes Gewinde zur Verwendung bei zwei miteinander durch Schraubung zu verbindenden Elementen, beispielsweise einem Bolzen und einer Mutter, bekanntgeworden. Das Gewinde ist freilaufend bis eine vorgegebene axiale Belastung auf die Gewinde der Elemente einwirkt und einen positiven Kontakt zwischen den Gewinden ausübt, wobei in den Flanken wenigstens eines Elementes eine schräg zur Gewindeachse verlaufende gewölbte Klemmfläche vorgesehen ist, an der der Grat des anderen Elementes bei Ausübung eines entsprechenden Anzugsmomentes angreift. Die Selbsthemmung erfolgt dann durch Verformung des Grates des anliegenden Zahnes, wobei aber, da die Klemmfläche gleichmäßig gewölbt ist, ein Zurückrutschen schnell erfolgen kann. Die erforderliche Längsverschiebung, um zur Selbsthemmung zu kommen, ist relativ groß.

Der Erfindung liegt die Aufgabe zugrunde, das gattungsbildende Gewinde derart zu verbessern, daß eine schnelle Verstärkung der Klemmwirkung und eine stabile Arretierung des Gewindegrates im Bereich der Klemmfläche erreichbar ist.

Diese der Erfindung zugrundeliegende Aufgabe wird durch die Lehre des Hauptanspruches gelöst.

Mit anderen Worten ausgedrückt wird vorgeschlagen, daß im Gegensatz zum Stand der Technik die Wölbung jeder Klemmfläche konkav - konvex ausgebildet ist, wobei durch diese konkav - konvexe Wölbung eine gute Zentrierung des Gewindegrates und damit ein besserer Freilauf gewährleistet wird, da noch kein stärkerer axialer Verschiebedruck auftritt. Die Mitdrehbewegung auf die Schraube wird dadurch erheblich verringert. Außerdem werden längere Klemmwege erzielt, ohne daß eine entsprechend weite seitliche Verschiebung erforderlich wäre. Außerdem erfolgt eine schnelle Verstärkung der Klemmwirkung durch die konvexe Form der Gewindeflanke und es kommt dadurch zu einer geringeren seitlichen Verschiebung. Weiterhin wird eine stabile Arretierung des Gewindegrates im Bereich des konvex - konkaven Übergangs erreicht, da hier eine gröbere Annäherung an eine Parallelität zur Schraubenachse erreicht wird. Die konvexe Form am Anfang der konvex - konkaven Klemmflanke führt zu einer massenmäßigen Stabilisierung und wirkt Gewindeabscherungen entgegen.

Vorteilhafte Ausgestaltungen sind in den Unteransprüchen erläutert.

Durch die beidseitige Wölbung wird das Prinzip des Kontermutterns möglich. Die Muttern können nicht verkehrt herum aufgesetzt werden und es entfällt eine Unterscheidung in links- oder rechtsdrehende Muttern; dadurch eine Halbierung der Lagerungserfordernisse.

Gemäß einem wesentlichen Merkmal der Erfindung wird ein sogenanntes "Doppelmutterprinzip" vorgeschlagen. Hierzu werden zwei Muttern einerseits über eine lösbare Verbindung drehfest miteinander verbunden, können nach Lösen dieser Verbindung aber gegeneinander verdreht werden, wobei der vorangehende Mutterteil die Klemmfläche nach rückwärts und der nachgehende Mutterteil die Klemmfläche nach vorwärts ausgerichtet hat. Die Richtungsneutralität bleibt aber erhalten, da durch Umdrehen der Muttern dieses Prinzip erhalten bleibt. Die Doppelmutter weist daher zwei voneinander unterschiedliche Gewindehälften auf und muß speziell hergestellt werden. Dazu muß z. B. auch die Verbindung der beiden Mutterhälften unter Freilauf des Gewindes gesichert sein. Die Wirkung dieses Doppelmutterprinzips ist, daß bei nur einseitig vorhandener Klemmfläche, z. B. zwei Muttern mit selbsthemmendem Gewinde, nun eine Richtungsneutralität gegeben ist. Dadurch, daß die beiden Muttern eine Einheit bilden, wird das Aufbringen der Muttern erleichtert und beschleunigt. Auf Gewindestangen können nun Muttern z. B. mit Gewindebohrungen versehene Elemente fest verankert werden, ohne daß eine Anlagerungsfläche erforderlich ist. Der Verriegelungsprozeß erfolgt unter vorbestehender Vorspannung durch Verdrehen der Mutternteile gegeneinander. Da nur eine Verschiebung um Bruchteile eines Millimeters in axialer Richtung erfolgt ohne eine Rotationsbewegung des Partners, wirkt sich die Vorspannkraft hauptsächlich im Sinne einer verstärkten Klemmwirkung aus.

Ausführungsbeispiele der Erfindung werden nachfolgend anhand der Zeichnungen erläutert. Die Zeichnungen zeigen dabei in
- Fig. 1: in einer sehr schematischen Darstellung eine Mutter mit erfindungsgemäßen Gewinde, in
- Fig. 2: ebenfalls in einer schematischen Darstellung einen Bolzen mit erfindungsgemäßen Gewinde, in
- Fig. 3: das Zusammenspiel zwischen Bolzen und Mutter, wobei die Mutter mit dem erfindungsgemäßen Gewinde ausgerüstet ist und die beiden Bauteile ohne Belastung und mit Belastung dargestellt sind, in
- Fig. 4: eine der Fig. 3 entsprechende Darstellung, um das Zusammenspiel zwischen Bolzen und Mutter zu verdeutlichen, wobei der Bolzen mit dem erfindungsgemäßen Gewinde ausgerüstet ist, in
- Fig. 5: die Ausbildung der ersten Gewindegänge als Übergang vom Normalgewinde zum Spezialgewinde, in
- Fig. 6: eine besondere Ausbildung der Grate der Gewindegänge, in den
- Fig. 7: eine abgewandelte Ausführungsform und in
- Fig. 8: zwei hintereinander geschaltete Muttern.

In den Zeichnungen ist mit 1 ein ein normales Gewinde aufweisender Bolzen, mit 2 eine ein normales Gewinde aufweisende Mutter, mit 10 ein das erfindungsgemäße Gewinde aufweisender Bolzen und mit 20 eine das erfindungsgemäße Gewinde aufweisende Mutter bezeichnet.

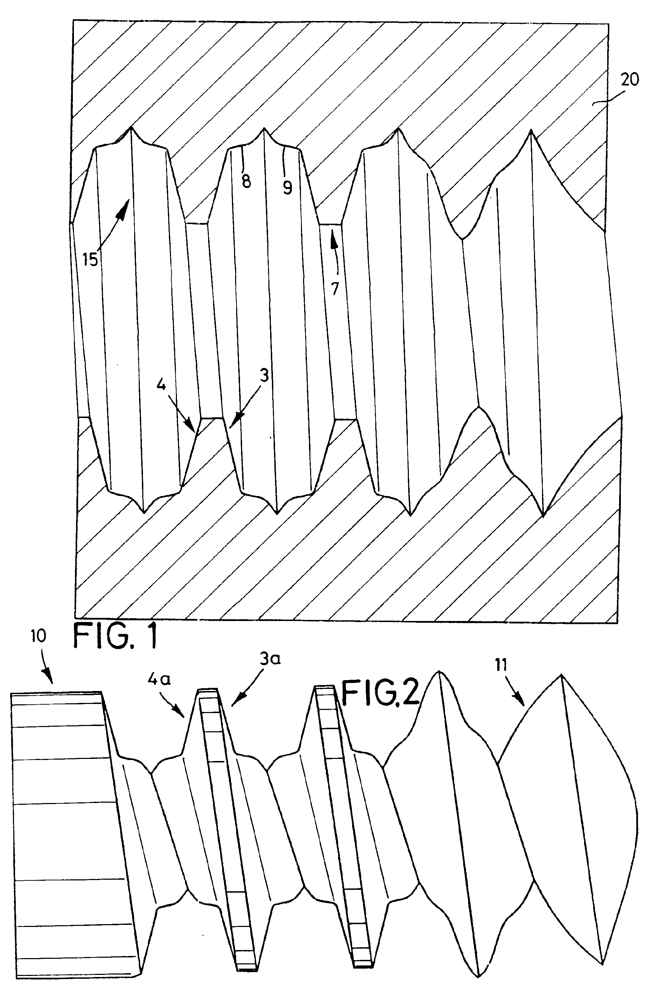

Aus der Darstellung in Fig. 1 ist erkennbar, daß die Flanken 3, 4 der Mutter 20 steiler gestellt sind als die Flanken 5 und 6 eines normalen Gewindes eines normalen Bolzens 1, so daß, wenn - wie dies deutlich die Fig. 3 zeigt - der Bolzen 1 in die Mutter 20 eingesetzt ist, die zusammenwirkenden Flächen der Gewinde inkongruent sind. Im Gewindefuß 15 sind zwei Klemmflächen 8, 9 vorgesehen, die gewölbt ausgebildet sind, wobei die Wölbung von dem anderen Element aus gesehen Konkav-konvex gestaltet ist.

Wie dies dann deutlich wiederum die Fig. 3 zeigt, kommt bei einer Bewegung des Bolzens 1 gegenüber der Mutter 20 oder umgekehrt der Grat des normalen Gewindes des Bolzens sehr schnell zur Anlage an der gewölbten Fläche der Klemmfläche 8, 9, so daß hier ein Linienkontakt entsteht.

Um diesen Linienkontakt noch zu verbessern, sind die Grate 7 der Mutter 20 abgeflacht, d. h. stumpf abgeschnitten, so daß auch hier - wie dies deutlich die Fig. 3 zeigt - bei Druckaufnahme zwischen Mutter 20 und Bolzen 1 ein Linienkontakt hergestellt wird.

In gleicher Weise ist der Bolzen 10 ausgebildet, d. h. die Flanken des Gewindes sind steiler gestellt als die Flanken der Mutter 2, die mit Normalgewinde ausgerüstet ist. Die Figuren zeigen außerdem, daß bei dem erfindungsgemäß ausgebildeten Bauteil, d. h. entweder dem Bolzen 10 oder der Mutter 20, der erste Gewindegang eine konvexe Gewindefläche 11 aufweist, die bei Druckaufnahme nur an der Gewindebasis mit dem anderen Element zusammenwirkt. Vorzugsweise kann dabei - wie dies auch deutlich die Fig. 2 zeigt - ein kontinuierlicher Übergang vom ersten, noch Flächenkontakt aufweisenden Gewindegang zum Spezialgewinde hergestellt werden.

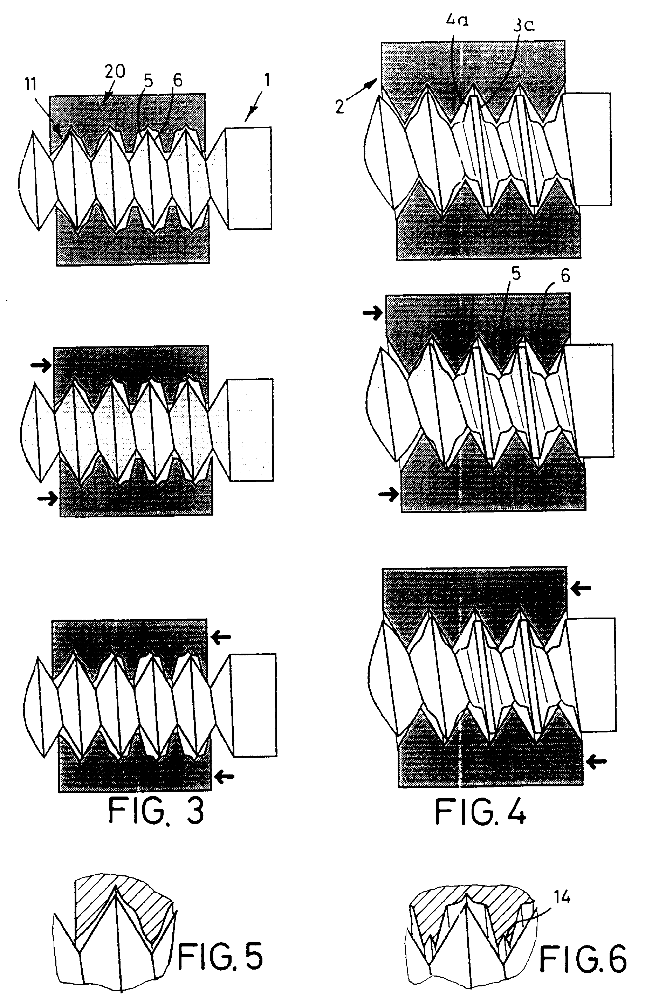

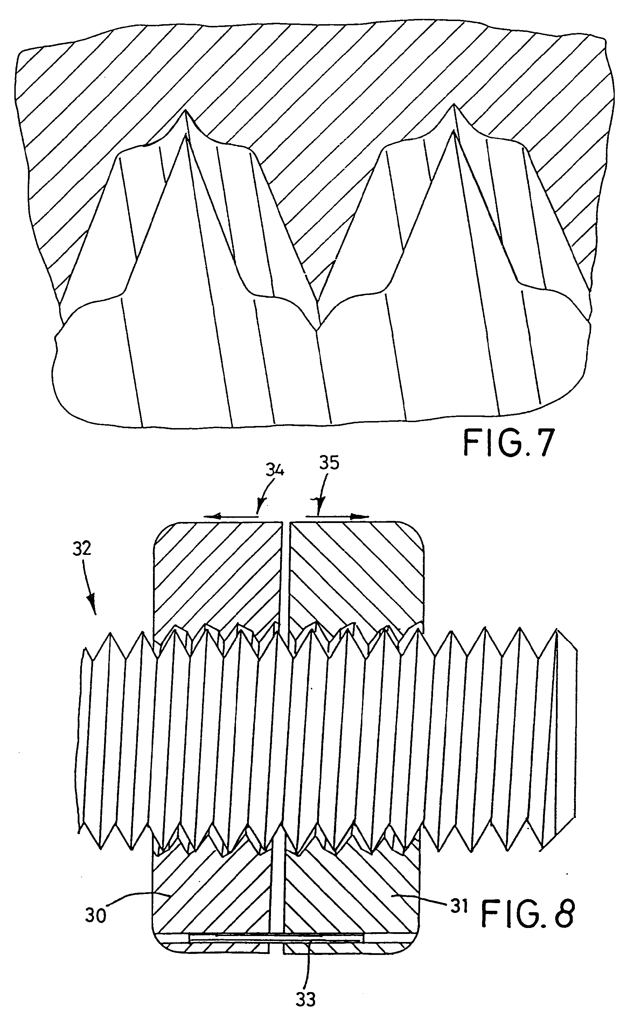

Während in den Fig. 1 bis 5 jeweils Gewinde dargestellt sind, bei denen entweder die Mutter oder der Bolzen gemäß der Erfindung bearbeitet worden ist, zeigt die Fig. 7, daß es auch möglich ist, die Gewinde sowohl des Bolzens wie auch der Mutter entsprechend auszubilden.

Die Erfindung bezieht sich weiterhin auf ein Werkzeug zur Herstellung des Gewindes und schließlich wird vorgeschlagen, daß das erfindungsgemäße selbsthemmende Gewinde mit grobem Vorteil als chirurgisches Hilfsmittel eingesetzt werden kann.

In Fig. 8 ist eine Doppelmutteranordnung mit den beiden Muttern 30 und 31 dargestellt, die auf einer Gewindestange 32 angeordnet sind. Die beiden Muttern 30 und 31 sind über ein Verbindungsmittel, z. B. einen Stift 33, drehfest miteinander verbunden, wobei dieser Stift 33 leicht entnommen werden kann, so daß dadurch dann die beiden Muttern 30, 31 gegeneinander gedreht werden können, und zwar im Sinne der Pfeile 34 und 35.

Das erfindungsgemäße Doppelmutterprinzip würde nicht durch das bloße Hintereinanderschalten von zwei Muttern erreicht, vielmehr muß der vorangehende Mutternteil 30 die Klemmfläche nach rückwärts und der nachgehende Mutternteil 31 die Klemmfläche nach vorwärts ausgerichtet haben. Die Richtungsneutralität bleibt aber erhalten, da durch Umdrehen der Muttern dieses Prinzip erhalten bleibt.

Gemäß der Erfindung kann weiterhin so vorgegangen werden, daß durch eine an ihrer Anlageseite konkav ausgebildete Scheibe eine maximale Pressung erzielbar ist. So kann beispielsweise zwischen die beiden Muttern 30 und 31 eine solche, wenigstens einseitig konkav ausgebildete Scheibe eingesetzt werden, die dann beim Zusammenziehen der Mutter eine gewisse Federkraft erzeugt. Eine solche Scheibe kann natürlich auch im Bereich einer üblichen Mutter angesetzt werden oder auch im Bereich eines eine ebene Anlagefläche aufweisenden Bolzenkopfes.

## Patentansprüche

1. Zwei miteinander durch Schraubung zu verbindende Elemente mit selbsthemmendem Gewinde, beispielsweise einem Bolzen (1) und einer Mutter (2), bei denen das Gewinde freilaufend ist, bis eine vorgegebene axiale Belastung auf die Gewinde der Elemente einwirkt und einen positiven Kontakt zwischen den Gewinden ausübt, wobei in den Flanken wenigstens einiger Gewindegänge wenigstens eines Elementes eine schräg zur Gewindeachse verlaufende Klemmfläche (8) vorgesehen ist, die Klemmfläche (8) ist gewölbt, an der Klemmfläche (8) greift der Grat des anderen Elementes bei Ausübung eines entsprechenden Anzugsmomentes an, dadurch gekennzeichnet, daß wenigstens eine Flanke (3, 4; 3a, 4a) wenigstens einiger Gewindegänge wenigstens eines Elementes (10, 20) steiler gestellt ist als die damit zusammenwirkende Flanke (5, 6) des anderen Elementes (Mutter 2 oder Bolzen 1), d. h., die zusammenwirkenden Flanken (3, 4; 3a, 4a, 5, 6) sind inkongruent, und die Wölbung jeder Klemmfläche (8, 9) ist konkav - konvex ausgebildet.

2. Elemente mit Selbsthemmendem Gewinde nach Anspruch 1, dadurch gekennzeichnet, daß die beiden Flanken (3, 4; 3a, 4a) eines Gewindeteiles steiler gestellt sind als die Flanken (5, 6) des anderen Elementes.

3. Elemente mit selbsthemmenden Gewinde nach Anspruch 1 oder 2, dadurch gekennzeichnet, daß die Grate (7) der steiler gestellten Gewindegände (3, 4; 3a, 4a) abgeflacht, d. h. stumpf abgeschnitten sind.

4. Elemente mit selbsthemmendem Gewinde nach Anspruch 1, 2 oder 3, dadurch gekennzeichnet, daß in dem die Klemmfläche (8) aufweisenden Gewindefuß (10) zwei sich im Gewindefußtiefsten treffende, schräg zur Gewindeachse verlaufende Klemmflächen (8, 9) vorgesehen sind.

5. Elemente mit selbsthemmendem Gewinde wenigstens nach Anspruch 1 oder 2, dadurch gekennzeichnet, daß der erste Gewindegang des die steiler gestellten Flanken (3, 4; 3a, 4a) aufweisenden Elementes eine konvexe Gewindefläche (11) aufweist, die nur an der Gewindebasis mit dem anderen Element zusammenwirkt.

6. Elemente mit selbsthemmendem Gewinde nach einem der vorhergehenden Ansprüche, dadurch gekennzeichnet, daß die Gewindegänge so ausgelegt sind, daß ein kontinuierlicher Übergang vom ersten noch Flächenkontakt aufweisenden Gewindegang zum Spezialgewinde mit Linienkontakt erreicht ist.

7. Elemente mit selbsthemmendem Gewinde nach Anspruch 3, dadurch gekennzeichnet, daß der abgeflachte Gewindegang eine Einkerbung (14) aufweist.

8. Elemente mit selbsthemmendem Gewinde nach einem der vorhergehenden Ansprüche, gekennzeichnet durch zwei gegeneinander verdrehbare Mutternteile (30, 31), bei welchen der vorangehende Mutternteil die Klemmfläche nach rückwärts und der nachgehende Mutternteil die Klemmfläche nach vorwärts ausgerichtet hat.

9. Elemente mit selbsthemmendem Gewinde nach einem der vorhergehenden Ansprüche, dadurch gekennzeichnet, daß die beiden Mutternteile (30, 31) drehfest miteinander verbindbar (Verbindungsmittel 33) sind.

10. Elemente mit selbsthemmendem Gewinde nach einem oder mehreren der vorhergehenden Ansprüche, dadurch gekennzeichnet, daß zwischen die beiden Mutternteile (30, 31) oder vor Muttern mit ebener Anlagefläche od. dgl. eine Klemmscheibe eingelegt ist, die eine konkav gewölbte Anlageseite aufweist und damit eine maximale Pressung erzielbar ist.

11. Werkzeug zur Herstellung eines Elements mit selbsthemmendem Gewinde nach einem oder mehreren der vorhergehenden Ansprüche, mit einem gewindeerzeugenden Teil, das eine entsprechende konkav-konvexe Wölbung jeder Klemmfläche ausbildet.

12. Miteinander durch Schraubung zu verbindende Elemente, wie beispielsweise Bolzen oder Mutter, mit einem selbsthemmenden Gewinde gemäß den Ansprüchen 1 bis 10, zum Einsatz als chirurgisches Hilfsmittel.

## Claims

1. Two members, for example a bolt (1) and a nut (2), to be connected together by screwing and having self-locking threads, in which the threads are free-running until a predetermined axial load acts on the threads of the members and effects positive contact between the threads, a clamping face (8) running at an angle to the thread axis being provided in the flanks of at least some turns of at least one member, which clamping face (8) is curved and on which clamping face (8) there acts the edge of the other member when a corresponding starting torque is exerted, characterized in that at least one flank (3, 4; 3a, 4a) of at least some turns of at least one member (10, 20) is steeper than the flank (5, 6) interacting therewith of the other member (nut 2 or bolt 1), i.e. the interacting flanks (3, 4; 3a, 4a, 5, 6) are incongruent, and the curvature of each clamping face (8, 9) is of concave/convex construction.

2. Members with self-locking threads according to claim 1, characterized in that the two flanks (3, 4; 3a, 4a) of one threaded part are steeper than the flanks (5, 6) of the other member.

3. Members with self-locking threads according to claim 1 or claim 2, characterized in that the edges (7) of the steeper turns (3, 4; 3a, 4a) are smoothed off, i.e. cut off to form truncated cones.

4. Members with self-locking threads according to claims 1, 2 or 3, characterized in that in the thread foot (10) comprising the clamping face (8) there are provided two clamping faces (8, 9) running at angles to the thread axis and meeting at the bottom of the thread foot.

5. Members with self-locking threads at least according to claim 1 or claim 2, characterized in that the first turn of the member comprising the steeper flanks (3, 4; 3a, 4a) comprises a convex thread surface (11), which interaacts with the other member only at the thread base.

6. Members with self-locking threads according to any one of the preceding claims, characterized in that the turns are so arranged that continuous transition is achieved between the first turn, which is still in planar contact, and the special thread with linear contact.

7. Members with self-locking threads according to claim 3, characterized in that the smoothed-off turn comprises a notch (14).

8. Members with self-locking threads according to any one of the preceding claims, characterized by two nut parts (30, 31) rotatable with respect to each other, in which the first nut part the clamping face oriented rearwardly and the subsequent nut part has the clamping face oriented forwardly.

9. Members with self-locking threads according to any one of the preceding claims, characterized in that the two nut parts (30, 31) can be connected together for rotation (connecting means 33).

10. Members with self-locking threads according to any one of the preceding claims, characterized in that a clamping disk is inserted between the two nut parts (30, 31) or in front of nuts with flat contact surfaces or the like, which clamping disk comprises a concavely curved contact side and with which maximum compression may be achieved.

11. A tool for producing a member with self-locking thread according to one or more of the preceding claims, comprising a thread-generating member which forms a corresponding concave/convex curvature on each clamping face.

12. Members to be connected together by screwing, such as bolts or nuts for example, comprising a self-locking threaad according to claims 1 to 10, for use as a surgical aid.

## Revendications

1. Deux éléments à relier entre eux par vissage avec un filet autobloquant, par exemple un boulon (1) et un écrou (2), dans lesquels le filet est libre, jusqu'à ce qu'une charge axiale prédéterminée agisse sur le filet des éléments et exerce un contact positif entre les filets, une surface de serrage (8) orientée en oblique par rapport à l'axe du filet étant prévue dans les flancs d'au moins un des éléments, la surface de serrage (8) étant courbe, l'arête de l'autre élément se mettant en prise sur la surface de serrage (8) en exerçant un moment d'attraction correspondant, caractérisés en ce qu'au moins un flanc (3, 4 ; 3a, 4a) d'au moins quelques tours de filet d'au moins un élément est plus abrupt que le flanc (5, 6) de l'autre élément (écrou 2 ou boulon 1) qui coopère avec lui, c'est-à-dire que les flancs qui coopèrent (3, 4 ; 3a, 4a, 5, 6) ne coïncident pas, et la courbure de chaque surface de serrage (8, 9) est de conformation concave-convexe.

2. Eléments à filet autobloquant selon la revendication 1, caractérisés en ce que les deux flancs (3, 4 ; 3a, 4a) d'une pièce filetée sont plus abrupts que les flancs (5, 6) de l'autre élément.

3. Eléments à filet autobloquant selon la revendication 1 ou 2, caractérisés en ce que les arêtes (7) des tours de filet (3, 4 ; 3a, 4a) plus abrupts sont aplaties, c'est-à-dire épointées.

4. Eléments à filet autobloquant selon la revendication 1, 2 ou 3, caractérisés en ce que deux surfaces de serrage (8, 9) orientées en oblique par rapport à l'axe du filet et se rencontrant au point le plus profond du fond du filet sont prévues dans le fond du filet (10) présentant la surface de serrage (8).

5. Eléments à filet autobloquant selon la revendication 1 ou 2 au moins, caractérisés en ce que le premier tour de filet de l'élément présentant les flancs plus abrupts (3, 4 ; 3a, 4a) présente une surface de filet (11) convexe, qui ne coopère avec l'autre élément qu'à la base du filet.

6. Eléments à filet autobloquant selon l'une des revendications précédentes, caractérisés en ce que les tours de filet sont conçus de telle sorte qu'une transition continue entre le premier tour de filet présentant encore un contact de surface et le filet spécial à contact linéaire est obtenue.

7. Eléments à filet autobloquant selon la revendication 3, caractérisés en ce que le tour de filet aplati présente une encoche (14).

8. Eléments à filet autobloquant selon l'une des revendications précédentes, caractérisés en ce qu'ils comportent deux parties d'écrou (30, 31) pouvant tourner l'une par rapport à l'autre, dans lesquelles la partie d'écrou située à l'avant présente une surface de serrage orientée vers l'arrière et la partie d'écrou située à l'arrière une surface de serrage orientée vers l'avant.

9. Eléments à filet autobloquant selon l'une des revendications précédentes, caractérisés en ce que les parties d'écrou (30, 31) peuvent être reliées entre elles (moyen de liaison 33) de manière fixe en rotation.

10. Elément à filet autobloquant selon l'une ou plusieurs des revendications précédentes, caractérisés en ce qu'une rondelle de serrage, qui présente une surface d'appui concave et permet ainsi d'obtenir une pression maximale, est introduite entre les deux parties d'écrou (30, 31) ou devant des écrous à surface d'appui plane ou similaires.

11. Outil pour la fabrication d'un élément à filet autobloquant selon l'une ou plusieurs des revendications précédentes, avec une partie produisant le filet, caractérisé en ce qu'il produit une courbure concave-convexe appropriée de chaque surface de serrage.

12. Eléments à relier entre eux par vissage, par exemple boulons ou écrous, avec un filet autobloquant selon les revendications 1 à 10, destinés à une utilisation comme moyen ancillaire chirurgical.
